# EUROPEAN PATENT APPLICATION

(11) **EP 1 800 826 A2**
(43) Date of publication of application: **27.06.2007**
(21) Application number: 06076482.6
(22) Date of filing: 26.07.2006
(51) Int. Cl.: B29C 37/00, B25J 9/04, B25J 15/06

(54) **Automatic dismoulding system**

(30) Priority: 23.12.2005 ES 200503170
(71) Applicant: Airbus España, S.L., 28906 Getafe (Madrid) (ES)
(72) Inventor: Lopez-Carrasco Picado, Jorge, 10300 Navalmoral de la Mata (ES); Santos Gomez, Jose Manuel, 28320 Madrid (ES)
(74) Representative: Ungria Lopez, Javier

(57) **Abstract**

An automatic dismoulding system for moulding modules (7) located in a curing tool (12), comprising:
a programmable robot (1) comprising an articulated arm (1a) with one end free, actuation means (13, 14) for conferring a horizontal rotary movement and a vertical tilting movement to the articulated arm (1a), and a head (2) located in the free end of the articulated arm (1a) with at least one vacuum suction pad (11) able to adhere itself to a surface (16, 17) of an object;
a voiding system (15) for generating a vacuum;
referencing means (3) for referencing a vertical and horizontal position of each object (6, 7); and
programmable controlling means (18) which govern said actuation means (13, 14) so that the articulated arm (1a) can position the suction pad (11) on that surface (16, 17) of the object (6, 7) in an initial position and transport it to a final position.

## Description

### FIELD OF THE INVENTION

This invention refers to a method for the extraction of modules used in the manufacture of pieces in the aeronautical industry. In particular, the invention applies to the extraction of modules used in the manufacture of pieces in the aeronautical industry done automatically, without the involvement of personnel in the extraction process of those modules.

### STATE OF THE ART PRIOR TO THE INVENTION

The horizontal stabiliser of an aircraft is a piece located in the tail thereof and is responsible for providing horizontal stability for the plane. This piece in turn consists of smaller pieces, specifically of at least four coverings, at least four spars and various ribs giving stiffness to the structure.

A covering of a horizontal stabiliser can be manufactured in aluminium or in carbon fibre. One process of manufacture in carbon fibre is, among others, the following: first of all the covering is taped to a tool generally made of Invar, the taping consists of depositing layers of carbon fibre impregnated with resin on the tool, according to different directions in order to obtain the desired properties. Once the covering has been taped, it needs to be granted stiffness for which a structure of horizontal and vertical stiffeners is used. In order to place the stiffeners in the covering in the right directions, certain modules with different geometries are used arranged in an array, between which the horizontal and vertical stiffeners are introduced. The modules are initially placed in a tipping frame, the stiffeners are introduced between them, and, once in position, the frame is rotated and the entire assembly, stiffeners and modules, is placed on the covering in the right position. Placed on this assembly is a bag with which a vacuum will be created in order to prevent porosities. The entire assembly (tool + covering + stiffeners + modules + vacuum bag) is then introduced into an oven called an autoclave in order to provide the piece with the desired characteristics.

After the curing, it is necessary to withdraw the vacuum bag and the modules of the covering. The vacuum bag is removed manually.

So far, the dismoulding or withdrawal of the modules located on the covering has been done manually. Two operators climbed onto the tool; each module has a threaded hole in each end into which the operator threaded a rod and then, by means of applying a force normal to the module it became separated from the covering. Each module was located inside a bin. In that bin, the modules were stacked vertically, with each level being separated with a rubber separator stored in another bin in order to prevent damage to those modules. The operation was repeated until all the modules had been withdrawn. If a bin became full then another one was started on.

It was therefore desirable to have a system that would carry out the dismoulding automatically, which would permit dismoulding of the pieces with lower cost, reducing the time taken and the human resources needed

### DESCRIPTION OF THE INVENTION

The present invention has the aim of overcoming the drawbacks of the state of the art described above by means of an automatic dismoulding system. The aim of this invention is to reduce the time and human resources used in the dismoulding of coverings, among other aeronautical pieces. The process, which is currently carried out manually, involves a high cost.

The automatic dismoulding system for moulding modules, located in a curing tool in which an aeronautical piece is cured, comprises on the one hand a programmable robot which in turn comprises at least one articulated arm with a free end, some first actuation means for conferring a horizontal rotary movement on the articulated arm, some second actuation means for conferring a vertical tilting movement on the articulated arm, and a head located at the free end of the articulated arm with at least one vacuum suction pad able, when it is given a vacuum, to adhere itself to a surface of at least one object to be displaced selected from between said modules and some rubber separators. Moreover, the automatic dismoulding system also comprises a voiding system for generating a vacuum at least when said suction pad is positioned on the surface of the object to displace.

Said automatic dismoulding system is characterised in that in addition it comprises referencing means for referencing the vertical and horizontal position of each object in an initial position in which the object is found and a final position to which the object has to be displaced; and programmable controlling means that govern those actuation means so that the articulated arm positions the suction pad on the surface of the object in said initial position and transports it to said final position, and which order the said voiding system to create the vacuum in the suction pad when it is positioned on said surface in said initial position, and to cease to create the vacuum when the object has been transported to said final position.

For the storage of the modules, the facility includes at least one module storage bin. In the same way, for the storage of the rubber separators, it also has at least one storage bin for them.

In the functioning of the automatic dismoulding system, the modules are removed from the curing tool for being transported to a module storage bin.

In the same way, in the functioning of the dismoulding system, the rubber separators are contained in a rubber separators bin for being transported to a module storage bin.

In the dismoulding process, the controlling means control the fact that, after having completed a level of stacking of modules within the modules bin, the head locates a level of rubber separators. In this way, between each level of stacking of modules there exists a level of rubber separators for protecting the modules against possible damage.

There exist referencing means, which are selected from among referencing stops, guides, marks painted on the floor and other similar, which permit the curing tool, the modules bin, the rubber separators bin and the robot to be placed in fixed positions.

The system includes some controlling means whose elements include some first sensor means and some first processor means. The first sensor means emit a full signal when they detect that the modules bin is full. When the first processor means capture that full signal they transmit a halt signal to the actuation means. Said halt signal is interrupted when the first sensor means cease to emit the full signal.

Also forming controlling means are some second sensor means and some second processor means. The second sensor means emit an empty signal when they detect that the rubber separators bin is empty. When the second processor means capture that empty signal they transmit a halt signal to the actuation means. Said halt signal is interrupted when the second sensor means cease to emit the empty signal.

The robot stated above can be a spherical type robot with articulated arm having six axes.

So, the dismoulding process consists of the following operations:
Once the covering or any other piece exits from the autoclave, it is off-loaded to the bay by means of a gantry crane. In this zone, the vacuum bag is removed manually. The covering is then lifted with the gantry crane and placed in the dismoulding zone by stopping it against the referencing means placed for that purpose.

Various boxes are located in positions defined by the referencing means, both for depositing the modules on one side of the robot and for containing the rubber separators on the other.

The extraction of the module is done under vacuum by at least one suction pad located in the head of the robot and whose dimension is suitable for the pieces to which it is applied.

By means of suitable programming, the robot positions itself with respect to the curing tool and starts the dismoulding. It locates the head with the suction pads on the module and applies a vacuum with which to secure it, it vertically withdraws the mould from its position and places it in the nearest bin, an operation that is repeated until the first level of stacking of a bin is completed. At that moment it displaces itself to the bin holding the rubber separators, it collects one of them and places it on the complete layer of moulds. The operation is repeated until all the moulds have been extracted or until one of the mould bins is full, in which case the facility is halted, the full bin is replaced with an empty one and the program continues its execution until all the modules have been extracted and they are located in the interior of the bins. In the event that the bin with the rubber separators becomes empty, then the facility is halted in the same way, the empty bin is replaced with a full one and the program recommences.

### BRIEF DESCRIPTION OF THE FIGURES

Described below are the figures and images attached:
figure 1 shows the structure of horizontal and vertical stiffeners of a covering for a horizontal stabiliser of an aircraft,
figure 2 shows a dismoulding module,
figure 3 shows a diagram of the automatic dismoulding system,
figure 4 shows the geometry of a suction pad,
figure 5 shows a rubber separator,
figure 6 shows a view in vertical cross-section of the modules bin,
figure 7 shows a view in vertical cross-section of the rubber separators bin,
figure 8A shows an upper plan view of the robot, and
figure 8B shows a lateral elevation view of the robot.

Appearing in these figures are numerical references denoting the following elements:
- 1: Robot
- la: Articulated arm
- 2: Head
- 3: Position referencing means
- 4: Bin for modules extracted by the robot
- 5: Rubber separators bin
- 6: Rubber separators
- 7: Module
- 8: Horizontal stiffener
- 9: Vertical stiffener
- 10: Covering
- 11: Suction pads
- 12: Curing tool
- 13: First actuation means
- 14: Second actuation means
- 15: Voiding system
- 16: Surface of the module
- 17: Surface of the rubber separator
- 18: Controlling means
- 19: First sensor means
- 20: First processor means
- 21: Second sensor means
- 22: Second processor means

### MODES OF EMBODIMENT OF THE INVENTION

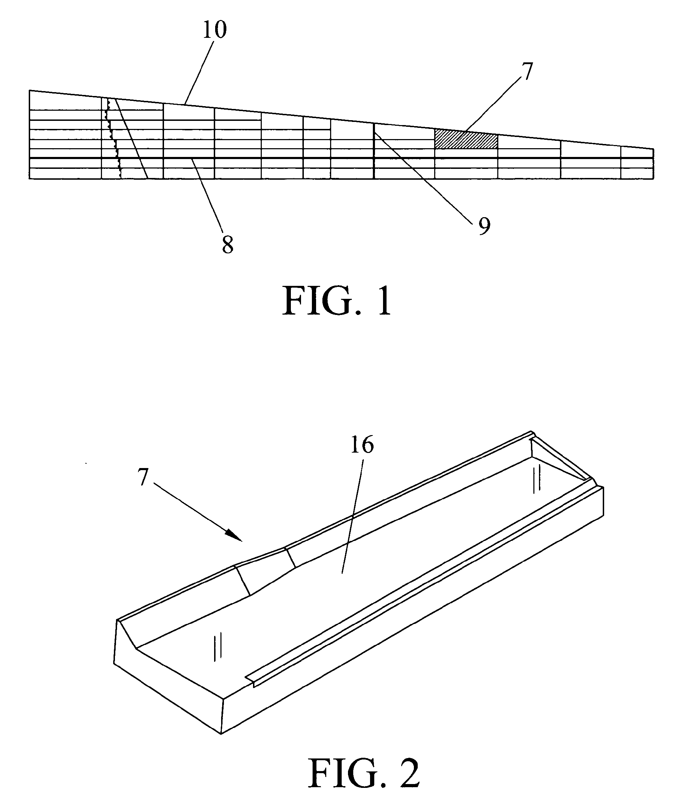

Figure 1 shows a cured covering. In it can be seen on the one hand the horizontal 8 and vertical 9 stiffeners and on the other the moulding modules 7. Said stiffeners 8 and 9 create a lattice structure in which the modules 7 are located. An example of those moulds can be seen in figure 2. Said modules 7 have to be withdrawn once the covering has been cured and taken out of the autoclave. This is the dismoulding process. The present invention has application to this process, carrying it out automatically.

The dismoulding operation is currently performed manually at a high cost. The present invention reduces the cost of the operation by means of an automatic dismoulding system.

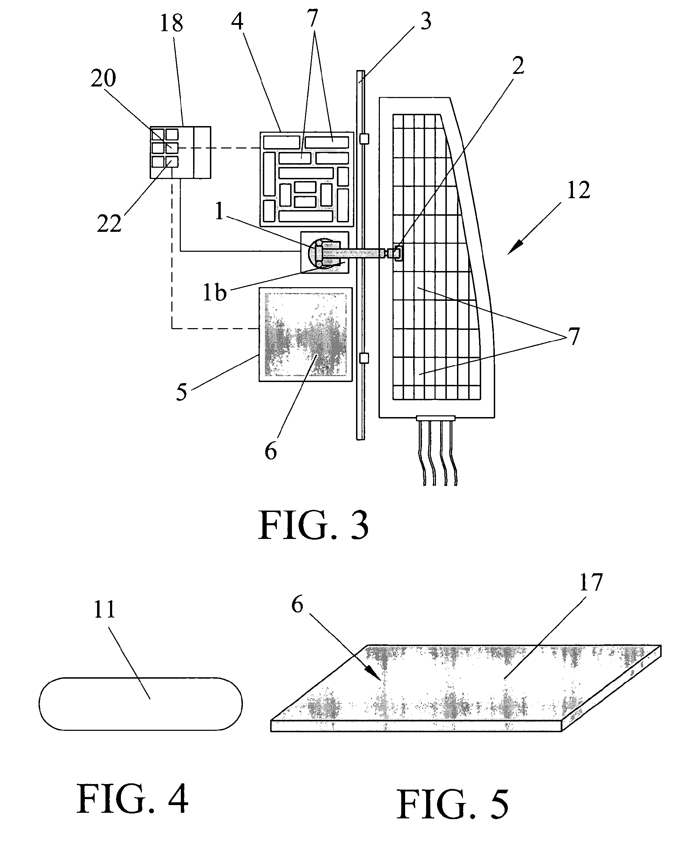

Figure 3 shows a preferred embodiment of the automatic dismoulding system. In it can be seen in schematic form the arrangement in plan view of all the elements of the automatic dismoulding system. We can see the curing tool 12, the robot 1, the modules bin 4, the rubber separators bin 5 and the controlling means 18.

As has already been commented, the curing tool initially has a large number of modules which have to be stripped in order to obtain the covering. In other embodiments of the invention, the piece to be stripped can be any other obtained by means of curing. Said curing tool is located in plan view according to the position marked by the position referencing means 3.

With regard to these same position referencing means 3, the robot 1, the modules bin 4 and the rubber separators bin 5 are located in their respective positions.

So, the elements of the automatic dismoulding system being arranged thus, the controlling means 18 proceed to order the dismoulding of the curing tool 12. The controlling means 18, taking account of the position in space defined by the position of the position referencing means 3, proceed to place the head 2 on the curing tool and they withdraw the modules 7 one by one. The withdrawal of each of the modules is carried out as follows: by means of the first actuation means 13, the robot 1 moves the articulated arm la which places the head 2 in the vertical of the module. The second actuation means 14 places the suction pad 11 on the surface of the module 16. At this moment the voiding system 15 creates the vacuum permitting the module 7 to be secured and transferred from the curing tool 12 to the modules bin 4. Once the head la is located on the modules bin 4, the voiding system 15 interrupts its action and releases the module 7. This action is repeated until one storage level of modules 7 in the modules bins 4 is completed.

Once a storage level of modules 7 in the modules bin 4 has been completed, the controlling means 18 order the robot 1 to displace the articulated arm 1a to the rubber separators bin 5. At this moment the head 2 locates the suction pad over the surface of the rubber separator 17, the voiding system 15 produces the vacuum and the rubber separator 6 is secured, permitting it to be transferred from the rubber separators bin 5 to the modules bin 4. Covering each level of stacking of modules 7 by a rubber separator 6 protects the modules 7 against possible deterioration in storage.

Figure 4 shows the geometry of one of these suction pads 11. The geometry of those suction pads 11 is adapted to the modules 7 that have to be withdrawn.

Figure 5 shows a rubber separator. This has certain dimensions so that it can completely cover each of the stacking levels of modules in the modules bin 4. In this way, the modules 7 are protected in storage.

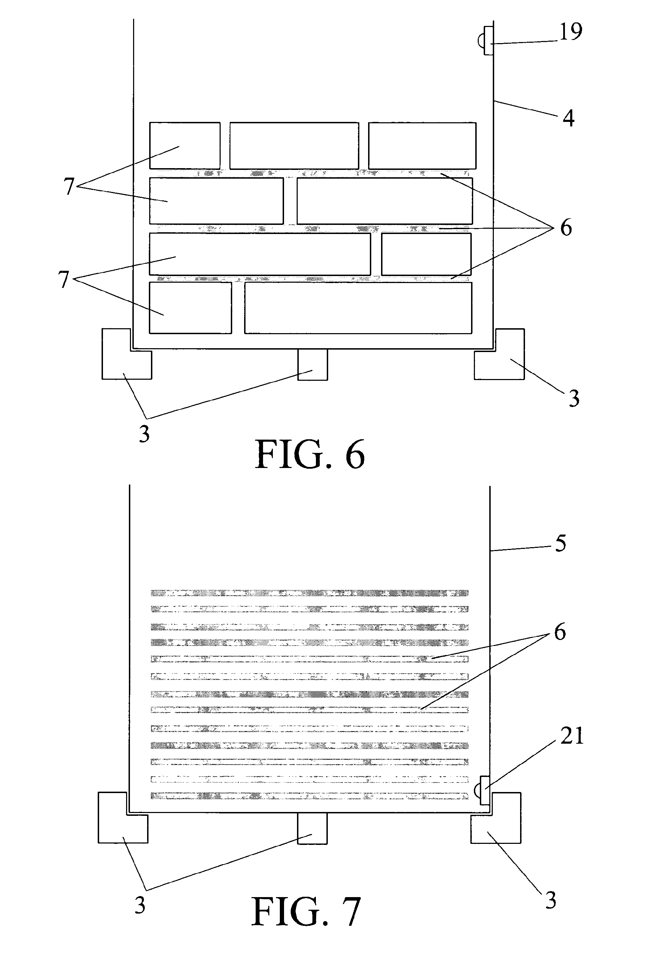

Figure 6 illustrates the vertical cross-section of a modules bin 4. The figure shows the moment at which a level of stacking has been completed and therefore the moment prior to depositing a rubber separator 6 on it. In the figure can also be seen the various position referencing means 3. These means can be, among others, some metallic stops on which the modules bin 4 is located. Also to be seen in the upper part of the bin 4 are the first sensor means 19. These sensor means 19 emit a full signal when they capture the fact that the bin 4 has become full. Said signal is processed by the first processing means 20 which emit the halt order to the actuation means 13 and 14. In this way the dismoulding is interrupted until the full modules bin 4 is replaced by another empty one. This replacement can be done by means of an operator who replaces the full bin for an empty one, by means of conveyor belts which withdraw the full bin 4 and return an empty bin 4 or other similar means. Once the full modules bin 4 has been replaced with an empty modules bin 4, the full signal is interrupted and with it the halt signal for the facility. The process thus continues until the bin 4 is full again or the dismoulding of the piece has ended.

Figure 7 shows a rubber separators bin 5. This bin 5 is located in the plant of the facility in a way similar to the modules bin 4. In the plant of the facility there exist position referencing means 3 which determine the position which the rubber separators bin 5 has to occupy. In the rubber separators bin 5 there exist some second sensor means 21 which emit an empty signal when that bin 5 becomes empty. This empty signal is captured by the second processing means 22 which send a halt signal to the actuation means 13 and 14. In this way the dismoulding is interrupted until the empty rubber separators bin 5 is replaced by another full one. The replacement is done in a manner analogous to the way in which the modules bin 4 is replaced. Once the empty rubber separators bin 5 has been replaced with a full bin 5, the empty signal is interrupted and with it the halt signal for the actuation means 13 and 14, and the dismoulding process continues.

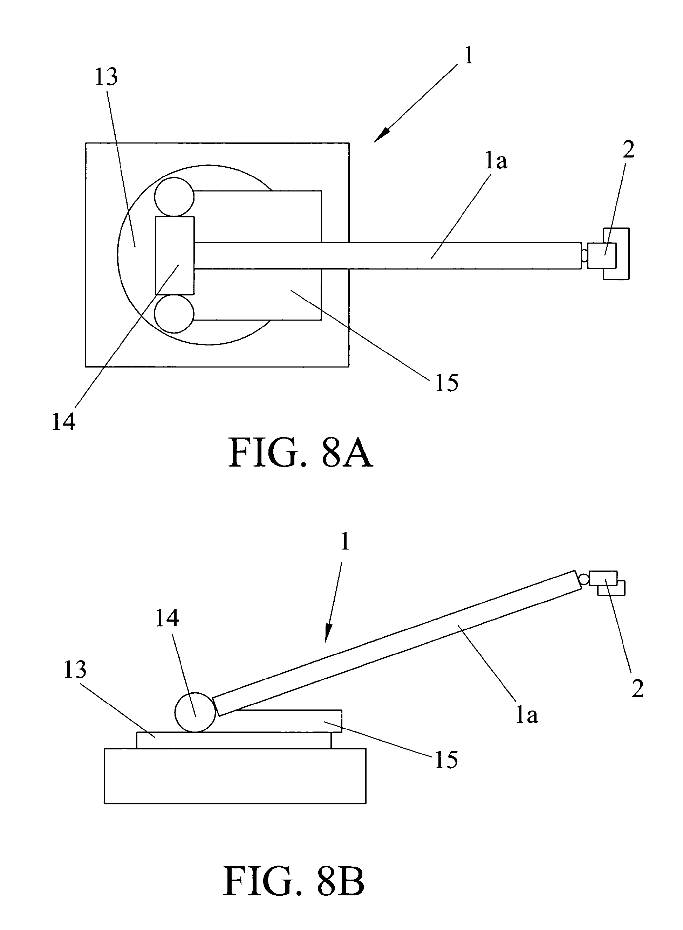

Figures 8A and 8B show an upper plan view and lateral elevation view of the robot 1. In them it can be seen the first actuation means 13 which permit a horizontal rotary movement of the articulated arm 1a and the second actuation means 14 which confer a vertical tilting movement on the articulated arm la. With these movements the articulated arm 1a gains access to the positions where the modules 7 are located in the curing tool 12 in order to displace them to the modules bin 4 adhered by vacuum to the head 2, and in the same way it displaces the rubber separators 6 from the rubber separators bin 5 to the modules bin 4. This robot 1 is controlled by controlling means 18 via a data cable not illustrated in figures 8A and 8B. In a preferred embodiment, this robot 1 is of the spherical type with articulated arm having six axes.

## Claims

1. An automatic dismoulding system for moulding modules (7) located in a curing tool (12) in which an aeronautical piece has been cured, comprising:
- a programmable robot (1) comprising at least one articulated arm (1a) with one end free, first actuation means (13) for conferring a horizontal rotary movement to the articulated arm (1a), second actuation means (14) for conferring a vertical tilting movement to the articulated arm (1a), and a head (2) located in the free end of the articulated arm (1a) with at least one vacuum suction pad (11) able, when it is given a vacuum, to adhere itself to a surface (16, 17) of at least one object to be displaced selected from between said modules (7) and some rubber separators (6);
- a voiding system (15) for generating a vacuum at least when said suction pad (11) is positioned on the surface (16, 17) of the object to be displaced (6, 7) ;
**characterised in that** the system further comprises
- referencing means (3) for referencing the vertical and horizontal position of each object (6, 7) in an initial position in which the object is found and a final position to which the object (6, 7) must be displaced, and
- programmable controlling means (18) which govern said actuation means (13, 14) so that the articulated arm (1a) can position the suction pad (11) on that surface (16, 17) of the object (6, 7) in said initial position and transport it to said final position, and which order said voiding system (15) to create the vacuum in the suction pad (11) when it is positioned on said surface (16, 17) in said initial position, and to cease to create said vacuum when the object (6, 7) has been transported to said final position.

2. Automatic dismoulding system according to claim 1, **characterised in that** it additionally comprises:
- at least one storage bin (4) for modules (7),
- at least one storage bin (5) for rubber separators (6) .

3. Automatic dismoulding system according to either of the above claims, **characterised in that** the initial position of the moulds (7) is the curing tool (12) and the final position of the moulds (7) is a storage bin (4) for modules (7).

4. Automatic dismoulding system according to any of the above claims, **characterised in that** the initial position of the rubber separators (6) is the storage bin (5) for rubber separators (6) and the final position of the rubber separators (6) is a storage bin (4) for modules (7).

5. Automatic dismoulding system according to any of the above claims, **characterised in that** the controlling means (18) cause the head (2) to position a level of rubber separators (6) between each level of stacking of the modules (7) in the modules bin (4).

6. Automatic dismoulding system according to any of the above claims, **characterised in that** the referencing means (3) are selected from among referencing stops, guides, marks painted on the floor and other similar.

7. Automatic dismoulding system according to claim 6, **characterised in that** the curing tool (12), the modules bins (4), the rubber separators bin (5) and the robot (1) are arranged in fixed positions defined by the referencing means (3).

8. Automatic dismoulding system according to any of the above claims, **characterised in that** the controlling means (18) comprise first sensor means (19) which emit a full signal when they detect that the modules bin (4) is full, and first processor means (20) for halting which transmit a halt signal to the actuation means (13, 14) when said first sensor means (19) emit a full signal.

9. Automatic dismoulding system according to claim 8, **characterised in that** the first processor means (20) for halting interrupt the halt signal to the actuation means (13, 14) when said first sensor means (19) cease to emit a full signal.

10. Automatic dismoulding system according to any of the above claims, **characterised in that** the controlling means (18) comprise second sensor means (21) which emit an empty signal when they detect that the rubber separators bin (5) is empty, and second processor means (22) for halting which transmit a halt signal to the actuation means (13, 14) when said second sensor means (21) emit an empty signal.

11. Automatic dismoulding system according to claim 10, **characterised in that** the second processor means (22) for halting interrupt the halt signal to the actuation means (13, 14) when said second sensor means (19) cease to emit an empty signal.

12. Automatic dismoulding system according to any of the above claims, **characterised in that** the robot (1) is a robot of the spherical type with articulated arm having six axes.
